# EUROPEAN PATENT SPECIFICATION

(11) **EP 0 207 764 B1**
(45) Date of publication and mention of the grant of the patent: **03.05.1995**
(21) Application number: 86305022.5
(22) Date of filing: 27.06.1986
(51) Int. Cl.: B29C 67/00, B29C 57/00

(54) **Methods for forming containers**
Verfahren zum Herstellen von Behältern
Procédés pour le formage de récipients

(30) Priority: 29.06.1985 GB 8516541; 25.02.1986 GB 8604661
(43) Date of publication of application: 07.01.1987
(73) Proprietor: Bock, Erik, DK-4070 Kr. Hyllinge (DK); RPC CONTAINERS LIMITED, Raunds, Northamptonshire NN9 6ED (GB)
(72) Inventor: Bock, Erik, DK-4070 Kr. Hyllinge (DK)
(74) Representative: Leckey, David Herbert

(56) References cited:
- EP-A- 0 179 199
- DE-B- 1 165 242
- DE-C- 918 090
- FR-A- 1 181 522
- FR-A- 1 311 120
- FR-A- 2 369 911
- GB-A- 742 516
- GB-A- 934 975
- GB-A- 1 048 727
- GB-A- 1 568 369
- US-A- 1 360 056
- US-A- 2 038 826
- US-A- 2 230 560
- US-A- 2 305 375
- US-A- 2 933 786
- US-A- 3 069 722
- US-A- 4 036 514
- US-A- 4 076 787
- US-A- 4 117 062
- US-A- 4 363 415
- PATENT ABSTRACTS OF JAPAN, vol. 8, no. 230 (M-333)(1667), October 23, 1984 & JP-A-59 111 827 (MITSUI SEKIYU KAGAKU KOGYO K.K.) 28-06-1984

## Description

This invention is concerned with methods for forming containers.

Conventionally, container bodies made for flexible, resilient plastics material are formed in their required final shape in a single moulding operation, e.g. by injection moulding or blow moulding.

It is an object of the present invention to provide improved methods and apparatus for forming container bodied of flexible, resilient plastics material and attaching handles thereto.

Larger plastics containers such as buckets require handles to carry them. These handles are mainly manufactured from steel wire or plastics. To hold the handle, the plastics container is normally moulded with handle lugs, projecting from the outer surface. This design causes complication in the mould resulting in lower production speed and higher capital cost, and also complicates decoration of the container - both printing and labelling wise.

A design maintaining a smooth outer surface of the container by recessing the handle lugs into the surface, is known. However, this design requires a split or collapsible core of the mould, which is very costly and slows down the production speed.

According to the invention there is provided a method of manufacturing a container and handle combination characterised by the combination of steps that a pre-formed container body of flexible, resilient plastics material is subjected to a cold-forming externally applied pressure operation in which the material is permanently deformed and stretched inwardly wherein two oppositely disposed inwardly extending hollow recesses are produced in the side wall of the container body by said externally applied pressure, said recesses being adapted to receive projections on a handle for the container, forming the handle having projections and enlarged heads on the substantially opposite ends, and forcing said enlarged heads into said hollow recesses causing said enlarged heads to expand the walls of said recesses to removably retain said projections.

The method may include positioning a pair of dies having bores therein internally of said container at substantially diametrically opposite positions on said side walls, and a pair of pistons outside said side walls in alignment with the bores of said dies, displacing the plastics material of said side walls into said bores by applying pressure thereto by moving said pistons against the side walls and into said bores so forming said opposite disposed inwardly extending hollow recesses.

The bores of said pair of dies may be positioned at subtantially right angles to said side walls.

During the displacing step the inwardly extending hollow recesses may be formed with wall thicknesses less than the thickness of the container side walls.

An enlarged head on pivotal projections on the handle may expand the walls of the intrusions inside the side wall of the container, if the walls of the intrusions have sufficiently thin wall thickness. This will "catch" the handle and make the fixture sufficient for normal use. If, however, one needs to take off the handle to change the label, it is still possible to pull the handle off the container and to replace it, when needed.

The foregoing and further features of the invention may be more readily understood from the following description of a preferred embodiment thereof, by way of example, with reference to the accompanying drawings, in which:-
Figure 1 is a sectional side view of apparatus for post forming handle-receiving recesses in a plastics container;
Figure 2 is a view on a larger scale of parts shown in Figure 1 after formation of a recess,
Figure 3 is a view on a larger scale of a pivotal projection on a handle received in a recess, and
Figure 4 is a part sectional view showing a container with a handle fitted.

In the embodiment, the container is made of flexible, resilient plastics material, e.g. polypropylene.

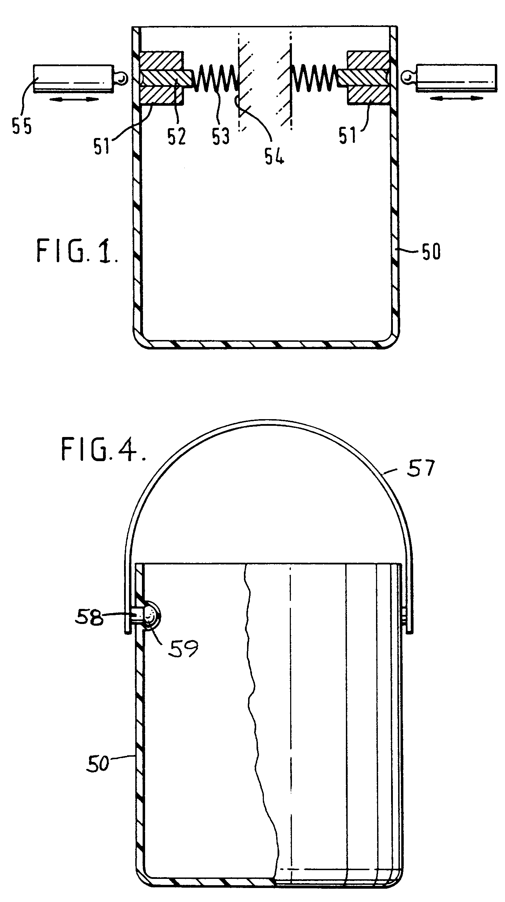

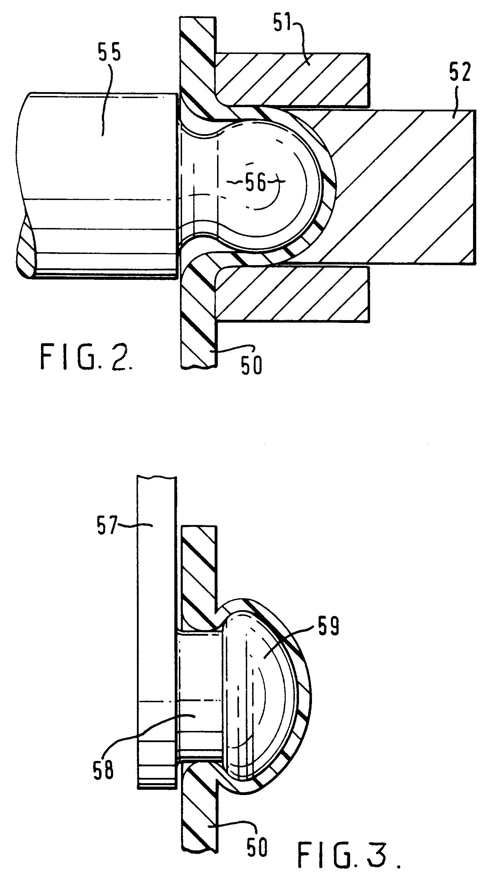

Figure 1 shows a pre-formed plastics container body 50 with two dies 51 positioned internally at diametrically opposite positions. Each die 51 has a through bore in which is reciprocably disposed a plunger 52 biassed outwardly by a spring 53 to provide a spring-loaded bottom for the die. The springs 53 have adjustable supports 54 so that the resistance to movement of the plungers 52 can be adjusted. Outside the container body are two pneumatically actuated pistons 55 having convex projections 56 which cooperate with concave recesses in the outer ends of plungers52. In use, the pistons are forced inwardly so that the projections 56 deform the side wall of the container body under the constraint imposed by the plungers 52 to form recesses. Figure 2 shows a piston 55 at the end of its inwards movement. The pistons are thereafter retracted. A handle 57 is formed at each end with a pivotal projection 58 having an enlarged head 59. Each projection 58 is pushed into its recess and the enlarged head 59 expands the walls thereof to catch the projection, as shown in Figures 3 and 4. The projection 58 is removably retained therein by its enlarged head 59. Owing to the resilience of the material forming the recess, the projection 58 can be removed by the application of moderate force.

It will be appreciated that in the cold-forming process described above, the forming pressure should be applied for at least a minimum period of time to ensure the desired permanent deformation of the plastics material. Such period of time is of course readily determined by practical experiment.

## Claims

1. A method of manufacturing a container and handle combination characterised by the combination of steps that a pre-formed container body (50) of flexible, resilient plastics material is subjected to a cold-forming externally applied pressure operation in which the material is permanently deformed and stretched inwardly wherein two oppositely disposed inwardly extending hollow recesses are produced in the side wall of the container body (50) by said externally applied pressure, said recesses being adapted to receive projections (58, 59) on a handle (57) for the container, forming the handle (57) having projections (58) and enlarged heads (59) on the substantially opposite ends, and forcing said enlarged heads (59) into said hollow recesses causing said enlarged heads (59) to expand the walls of said recesses to removably retain said projections (58).

2. A method of forming a container as claimed in Claim 1 characterised by positioning a pair of dies (51) having bores therein internally of said container (50) at substantially diametrically opposite positions on said side walls, and a pair of pistons (55) outside said side walls in alignment with the bores of said dies (51), displacing the plastics material of said side walls into said bores by applying pressure thereto by moving said pistons (55) against the side walls and into said bores so forming said oppositely disposed inwardly extending hollow recesses.

3. A method as claimed in Claim 2 characterised in that the bores of said pair of dies (51) are positioned at substantially right angles to said side walls.

4. A method as claim in Claim 2 or 3 characterised in that during the displacing step the inwardly extending hollow recesses are formed with wall thicknesses less than the thickness of the container side walls.

5. A method as claimed in Claim 2, 3 or 4 characterised by said pair of pistons (55) having convex projections thereon moveable against said side walls and into said bores.

## Patentansprüche

1. Ein Verfahren zur Herstellung einer Behälter- und Griff-Kombination, charakterisiert durch eine Kombination von Schritten in denen ein vorgeformter Behälterkörper (50) aus flexiblem, federnden Plastikmaterial einem kaltformenden von außen angewandten Druckvorgang unterworfen wird in welchem das Material permanent verformt und nach innen gedehnt wird, wobei zwei entgegengesetzt angeordnete sich nach innen ausdehnende hohle Vertiefungen in der Seitenwand des Behälterkörpers (50) durch den genannten von außen angewandten Druck produziert werden und die genannten Vertiefungen so angepaßt sind, daß sie die vorstehende Teile (58, 59) an einem Griff (57) für den Behälter aufnehmen und somit den Griff (57) bilden, der vorstehende Teile (58) und vergrößerte Köpfe (59) an den im wesentlichen gegenüberliegenden Enden besitzt, wobei die genannten vergrößerten Köpfe (59) in die genannten hohlen Vertiefungen gepreßt werden, wodurch die genannten vergrößerten Köpfe (59) die Wände der genannten Vertiefungen ausdehnen, damit diese die genannten vorstehenden Teile (58) halten, diese jedoch entfernt werden können.

2. Ein Verfahren zur Herstellung eines Behälters wie nach Anspruch 1, dadurch charakterisiert, daß zwei Scheibchen (51), die Bohrlöcher haben innerhalb des genannten Behälters (50) im wesentlichen im diametral gegenüberliegenden Positionen an den genannten Seitenwänden positioniert werden und zwei Kolben (55) außerhalb der genannten Seitenwände auf gleicher Höhe mit den Bohrlöchern der genannten Scheibchen (51), wobei das Plastikmaterial der genannten Seitenwände durch die Anwendung von Druck auf die genannten Bohrungen in diese verschoben wird, indem die genannten Kolben (55) gegen die Seitenwände und in die genannten Bohrungen geführt werden und so die genannten entgegengesetzt angeordneten sich nach innen ausdehnenden hohlen Vertiefungen bilden.

3. Ein Verfahren wie nach Anspruch 2, dadurch charakterisiert, daß die Bohrungen der genannten zwei Scheibchen (51) im wesentlichen im rechten Winkel zu den genannten Seitenwänden positioniert werden.

4. Ein Verfahren wie nach Anspruch 2 und 3, dadurch charakterisiert, daß während der Verschiebungsphase die sich nach innen ausdehnenden hohlen Vertiefungen mit einer Wandstärke gebildet werden, die geringer ist als die Stärke der Seitenwände des Behälters.

5. Ein Verfahren wie nach Anspruch 2, 3 oder 4, dadurch charakterisiert, daß die genannten zwei Kolben (55) konvexe vorstehende Teile besitzen, die gegen die genannten Seitenwände und in die genannten Bohrungen geführt werden.

## Revendications

1. Un procédé pour fabriquer un ensemble formé d'un récipient et de son anse, caractérisé en ce qu'il comprend la combinaison d'étapes suivantes : soumettre un corps de récipient pré-formé (50) en matière plastique souple et élastique à une opération de pression à froid appliquée de l'extérieur dans laquelle la matière est déformée de façon permanente et étirée vers l'intérieur, de telle manière que sont produits dans la paroi latérale du corps de récipient (50), par ladite pression appliquée extérieurement, deux espaces en creux opposés s'étendant vers l'intérieur, les deux espaces en creux étant prévus pour recevoir des bossages (58; 59) sur une anse (57) destinée au récipient ; former l'anse (57) comportant des bossages (58) et des têtes élargies (59) à ses extrémités sensiblement opposées ; et forcer lesdites têtes élargies (59) dans lesdits espaces en creux de telle manière que ces dernières allongent les parois desdits espaces en creux pour retenir de façon amovible lesdits bossages (58).

2. Un procédé pour fabriquer un récipient selon la revendication 1, caractérisé en ce qu'il comprend les étapes de positionner à l'intérieur dudit récipient (50) et en des positions sensiblement opposées diamétralement sur lesdites parois latérales, une paire de matrices (51) présentant intérieurement des alésages, ainsi qu'une paire de pistons (55) à l'extérieur desdites parois latérales et en alignement avec les alésages desdites matrices (51), déplacer la matière plastique desdites parois latérales dans lesdits alésages en y appliquant une pression du fait de faire avancer lesdits pistons (55) contre les parois latérales et dans lesdits alésages, afin de former lesdits espaces en creux opposés s'étendant vers l'intérieur.

3. Un procédé selon la revendication 2, caractérisé en ce que les alésages de ladite paire de matrices (51) sont positionnés sensiblement à angle droit par rapport auxdites parois latérales.

4. Un procédé selon la revendication 2 ou 3, caractérisé en ce que durant l'étape de déplacement, les espaces en creux s'étendant vers l'intérieur sont formés avec des épaisseurs de paroi moindres que celle des parois latérales du récipient.

5. Un procédé selon l'une des revendications 2, 3 ou 4, caractérisé en ce que ladite paire de pistons (55) présentent des bossages convexes déplaçables contre lesdites parois latérales et dans lesdits alésages.
